**Europäisches Patentamt**

**European Patent Office**

**Office européen des brevets**

(19)

(11) Veröffentlichungsnummer : **0 055 690**
**B1**

(12) # EUROPÄISCHE PATENTSCHRIFT

(45) Veröffentlichungstag der Patentschrift :
02.01.86

(51) Int. Cl.⁴ : **F 41 C 25/08**

(21) Anmeldenummer : **81810425.9**

(22) Anmeldetag : **27.10.81**

(54) **Abdichtung des Schlitzes im Waffengehäuse einer Handfeuerwaffe für den Durchtritt des Spanngriffs.**

(30) Priorität : **30.12.80 CH 9646/80**

(43) Veröffentlichungstag der Anmeldung :
**07.07.82 Patentblatt 82/27**

(45) Bekanntmachung des Hinweises auf die Patenterteilung : **02.01.86 Patentblatt 86/01**

(84) Benannte Vertragsstaaten :
**AT BE CH DE FR GB IT LI NL SE**

(56) Entgegenhaltungen :
**CH-A-   508 830**
**DE-C-   856 263**
**FR-A- 2 295 403**
**US-A- 1 523 067**

(73) Patentinhaber : **SIG Schweizerische Industrie-Gesellschaft**

**CH-8212 Neuhausen am Rheinfall (CH)**

(72) Erfinder : **Bernet, Alois**
**Rheingoldstrasse 49**
**CH-8212 Neuhausen am Rheinfall (CH)**
Erfinder : **Brodbeck, Eduard**
**Schönebuche 23**
**CH-8222 Beringen (CH)**

(74) Vertreter : **Schmid, Rudolf et al**
**c/o ISLER & SCHMID Patentanwaltsbureau Walchestrasse 23**
**CH-8006 Zürich (CH)**

**Beschreibung**

Die vorliegende Erfindung betrifft eine Vorrichtung zum Abdecken des Schlitzes im Waffengehäuse für den mit dem Verschluss mitlaufenden Spanngriff einer automatischen Handfeuerwaffe gemäss dem Oberbegriff des unabhängigen Patentanspruchs 1.

Moderne Handfeuerwaffen sind mit einem am Verschluss befestigten Spanngriff zum Oeffnen des Verschlusses und/oder Einschieben einer Patrone in das Patronenlager versehen. Dies bedingt im Waffengehäuse einen entsprechenden Schlitz von der Länge des Weges, den der Spanngriff zurücklegt. Durch diesen Schlitz können Fremdkörper bzw. es kann Schmutz in die Waffe eindringen.

Es sind Vorrichtungen bekannt geworden, um diesen Schlitz abzudecken, beispielsweise mit dem Sicherungshebel, wie beim Kalashnikow-Gewehr, oder mittels umlegbarer Klappen beim Beretta AR70-Gewehr oder durch einen durch den Spanngriff bewegten Deckel, der parallel zur Gehäusewand verschoben wird.

Nachteilig an diesen Abdeckungsmitteln sind :
— beim Sicherungshebel kann die Waffe in gesichertem Zustand weder ge- noch entladen werden, zudem ist der Schlitz im entsicherten Zustand nicht verdeckt ;
— bei der umlegbaren Klappe wird die Ladebewegung bei geschlossener Klappe behindert und die Oeffnung im Gehäuse bleibt während der Verschlussfunktion und in Feuerpausen offen ;
— beim bewegten Deckel können Störungen infolge der Beschleunigungskräfte, die der hin- und hergehende Spanngriff auf den Deckel ausübt, erfolgen, insbesondere, weil die damit bewirkten Reibungskräfte die Geschwindigkeit des Verschlusses abbremsen können. Bei Sand und Schlamm, wo der Deckel seine Aufgabe erfüllen sollte, entstehen zusätzliche Reibungskräfte zwischen der Gehäusewand und dem Deckel infolge partikelnartiger Fremdkörper. Der Deckel ist aussenseitig des Gehäuses mit Feder und Führungszapfen sehr exponiert und kann daher beschädigt werden.

Es ist nun Aufgabe der Erfindung, eine Vorrichtung der eingangs beschriebenen Art zu schaffen, mit der der Schlitz in jeder Stellung des Spanngriffs verschlossen bleibt und mit der die normale Funktion der Waffe nicht nachteilig beeinflusst wird.

Erfindungsgemäss wird dies durch die Merkmale im kennzeichnenden Teil des Anspruchs 1 erreicht.

Aus der DE-C 856 263, der FR-A 2 295 403 und der CH-A 508 830 sind Abdichtungen von Schlitzen, durch welche ein längsbewegliches Element ragt, bekannt. Bei diesen Abdichtungen sind jeweils zwei sich auf einer Randpartie berührende, das Element umfassende Dichtlippen vorgesehen. Überraschenderweise eignen sich diese auf andern Fachgebieten vorgeschlagenen Abdichtungen für die Einsatzbedingungen einer Handfeuerwaffe.

Ein Ausführungsbeispiel der Erfindung wird nachfolgend anhand der Zeichnung beschrieben. Es zeigen :

Figur 1 eine Handfeuerwaffe im Aufriss,

Figur 2 einen Teil des Waffengehäuses im Schnitt, mit einem schematisch dargestellten Riegel und der erfindungsgemässen Vorrichtung, nach der Schnittlinie II-II in Fig. 1, und

Figur 3 eine Draufsicht auf den durch die erfindungsgemässe Vorrichtung verschlossenen Schlitz mit dem geschnittenen Riegel,

Figur 4 eine Schnittansicht der Vorrichtung ähnlich Fig. 2, jedoch in stark vergrössertem Massstab.

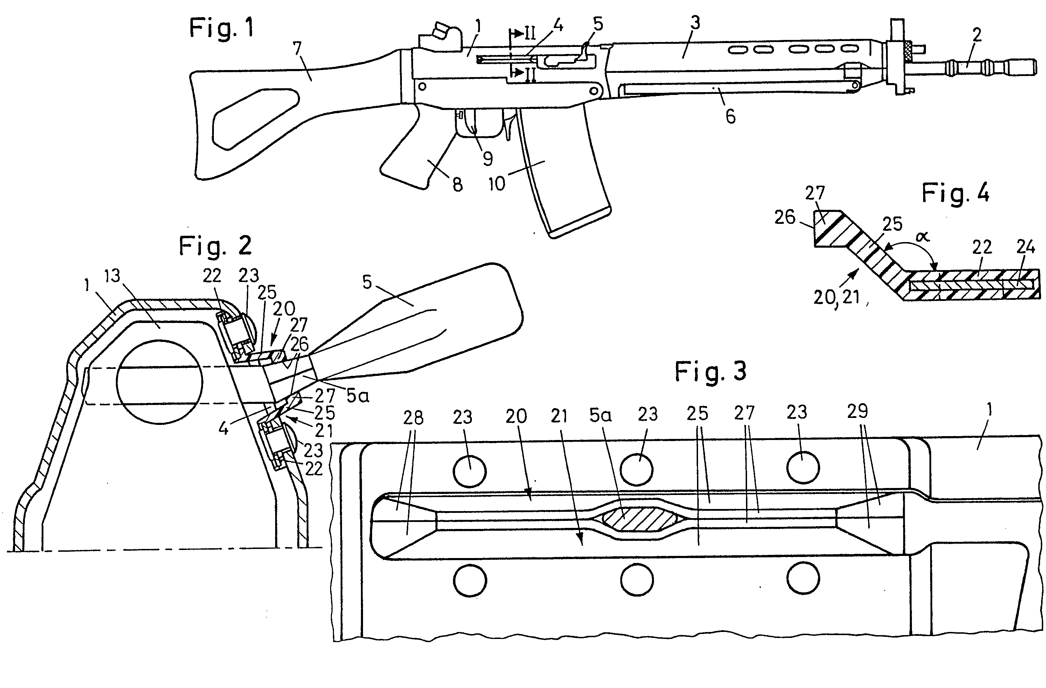

Die Handfeuerwaffe gemäss Fig. 1 besteht aus dem Gehäuse 1 mit dem Schlitz 4 und dem als Spanngriffausgebildeten Riegel 5, ferner dem Handschutz 3 und dem Lauf 2. Am Handschutz 3 sind die Stützen 6 drehbar gelagert. Der Kolben 7 und der Pistolengriff 8 mit dem Abzug 9 und dem Magazin 10 sind am Gehäuse 1 befestigt.

Fig. 2-4 zeigen die Form des Gehäuses 1 im Querschnitt und in der Draufsicht mit dem Riegelschlitz 4 und dem Riegel 5, der in den schematisch mit den Umrisslinien dargestellten Verschluss 13 eingesetzt ist. Zwei Dichtlippen 20, 21 sind innenseitig am Gehäuse 1 und beidseitig des Schlitzes 4 angeordnet und sind beispielsweise mit Nieten 23 befestigt. Die Dichtlippen 20, 21 sind aus elastischem Kunststoff, wie Polyurethan, hergestellt. Es lassen sich ein Halteteil 22 und ein Lippenteil 25 unterscheiden. Der Halteteil 22 weist eine starre Einlage 24 auf, die allseitig von Kunststoff umschlossen ist und beispielsweise aus Metall bestehen kann. Der Lippenteil 25 bildet mit dem Halteteil 22 einen stumpfen Winkel $\alpha$ und besitzt an seiner äusseren Partie eine in einer senkrechten Ebene auf dem Halteteil liegende Dichtfläche 26 an einem Dichtungswulst 27.

Wie Fig. 3 deutlich zeigt, liegen die Dichtflächen 26 der beiden Dichtlippen 20, 21 aufeinander und der mit einem schwertartigen Querschnitt ausgebildete Riegelhals 5a kann die Dichtlippen bei einer Hin- und Herbewegung in Bewegungsrichtung voneinander trennen, die sich hinter dem Riegel wieder schliessen und aufeinander aufliegen.

Die Endpartien 28 und 29 der Dichtlippen 20 und 21 sind abgeflacht, derart, dass deren Dichtflächen ebenfalls aufeinanderliegen und den Schlitz an dessen Endpartien verschliessen.

Derartige Dichtlippen 20, 21, die innenseitig am Waffengehäuse 1 angeordnet sind, stehen nur wenig über dessen Aussenfläche vor und daher wird die Handhabung der Waffe in keiner Weise beeinträchtigt. Die Dichtlippen stehen unter einer Vorspannung, die durch den Winkel $\alpha$ zwischen Lippenteil und Halteteil sowie durch Materialwerte gegeben ist. Damit schliesst sich die Abdeckung beim Vor- und beim Rücklauf des Riegels selbständig unmittelbar hinter dem Riegel wieder, so dass der Schlitz auch während des Schiessens praktisch immer verschlossen bleibt.

## Patentansprüche

1. Vorrichtung zum Abdecken des Schlitzes im Waffengehäuse für den mit dem Verschluss mitlaufenden Spanngriff einer automatischen Handfeuerwaffe, gekennzeichnet durch zwei von den Längsseiten des Schlitzes (4) nach aussen vorstehende und sich gegenseitig auf wenigstens einer Randpartie berührende, den Spanngriff (5) umfassende Dichtlippen (20, 21).

2. Vorrichtung nach Patentanspruch 1, dadurch gekennzeichnet, dass die Dichtlippen (20, 21) unter sich gleich ausgebildet sind und je aus einem Halteteil (22) zur Befestigung im Waffengehäuse und einem elastischen Lippenteil (25) bestehen.

3. Vorrichtung nach Patentanspruch 2, dadurch gekennzeichnet, dass eine mittlere Partie des Lippenteils (25) mit dem Halteteil (22) einen stumpfen Winkel bildet und an der Randpartie mit einer senkrecht zum Halteteil angeordneten Dichtfläche (26) versehen ist.

4. Vorrichtung nach Patentanspruch 3, dadurch gekennzeichnet, dass die beiden Endpartien (28, 29) des Lippenteils (25) nach aussen hin abgeflacht sind, derart, dass deren Dichtflächen mit der Dichtfläche (26) im mittleren Lippenteil (25) in einer gemeinsamen Ebene liegen.

5. Vorrichtung nach Patentanspruch 4, dadurch gekennzeichnet, dass die Dichtlippen (25) aus einem elastischen Material bestehen.

6. Vorrichtung nach Patentanspruch 5, dadurch gekennzeichnet, dass das elastische Material ein Kunststoff ist.

7. Vorrichtung nach Patentanspruch 6, dadurch gekennzeichnet, dass der Kunststoff Polyurethan ist.

8. Vorrichtung nach Patentanspruch 7, dadurch gekennzeichnet, dass der Halteteil (22) eine im Kunststoff eingebettete starre Einlage (24) aufweist.

9. Vorrichtung nach Patentanspruch 8, dadurch gekennzeichnet, dass der Spanngriff (5) wenigstens im Bereich der Berührung mit den Dichtlippen einen schwertförmigen Querschnitt aufweist.

10. Vorrichtung nach Patentanspruch 2, dadurch gekennzeichnet, dass die Dichtlippen (20, 21) im Innern des Verschlussgehäuses (1) befestigt sind und die Lippenteile (25) durch den Schlitz (4) nach aussen vorstehen.

## Claims

1. A device for covering the slot in the casing of an automatic hand firearm for the cocking handle moving with the breech block, characterised by two sealing lips (20, 21) which project outwardly from the longitudinal sides of the slot (4) and which are in mutual contact with at least at one edge portion and embrace the cocking handle (5).

2. A device as claimed in claim 1, characterised in that the sealing lips (20, 21) are of identical construction and each comprises a retaining part for securing it in the weapon casing, and a resilient lip part (25).

3. A device as claimed in claim 2, characterised in that a centre portion of the lip part (25) forms an obtuse angle with the retaining part (22), and the edge portion of the said lip part is provided with a sealing surface (26) disposed at right angles to the retaining part.

4. A device as claimed in claim 3, characterised in that the two end portions (28, 29) of the lip part (25) are flattened outwardly in such a way that their sealing surfaces lie in a common plane with the sealing surface (26) in the centre part (25) of the lip.

5. A device as claimed in claim 4, characterised in that the sealing lips (25) are made from a resilient material.

6. A device as claimed in claim 5, characterised in that the resilient material is a plastics material.

7. A device as claimed in claim 6, characterised in that the plastics material is polyurethane.

8. A device as claimed in claim 7, characterised in that the retaining part (22) has a rigid inlay (24) embedded in the plastics material.

9. A device as claimed in claim 8, characterised in that the cocking handle (5) has a sword-shaped cross section at least in the region in which the cocking handle is in contact with the sealing lips.

10. A device as claimed in claim 2, characterised in that the sealing lips (20, 21) are secured in the interior of the breech block housing, and the lip parts (25) project outwardly through the slot (4).

## Revendications

1. Dispositif pour le recouvrement de la fente formée dans la boîte de culasse pour la poignée d'armement, couplée à la culasse, d'une arme à feu individuelle automatique, caractérisé par deux lèvres d'étanchéité (20, 21) qui font saillie à l'extérieur sur les côtés longitudinaux de la fente (4), se touchent mutuellement sur une partie au moins de leur bord et embrassent la poignée d'armement (5).

2. Dispositif selon la revendication 1, caractérisé en ce que les lèvres d'étanchéité (20, 21) sont réalisées sous une forme semblable entre elles et se composent chacune d'une partie de fixation (22) pour leur fixation dans la boîte de culasse et d'une partie lèvre élastique (25).

3. Dispositif selon la revendication 2, caractérisé en ce qu'une partie moyenne de la partie lèvre (25) forme un angle obtus avec la partie de fixation (22) et est munie, sur sa partie bordante, d'une surface d'étanchéité (26) disposée perpendiculairement à la partie de fixation (22).

4. Dispositif selon la revendication 3, caractérisé en ce que les deux parties d'extrémité (28, 29) de la partie lèvre (25) sont aplaties vers l'extérieur, de telle manière que leurs surfaces d'étanchéité se trouvent dans un plan commun avec la surface d'étanchéité (26) formée dans la partie lèvre moyenne (25).

5. Dispositif selon la revendication 4, caractérisé en ce que les lèvres d'étanchéité (25) sont faites d'une matière élastique.

6. Dispositif selon la revendication 5, caractérisé en ce que la matière élastique est une matière synthétique.

7. Dispositif selon la revendication 6, caractérisé en ce que la matière synthétique est un polyuréthanne.

8. Dispositif selon la revendication 7, caractérisé en ce que la partie de fixation (22) comporte une armature (24) rigide, noyée dans la matière synthétique.

9. Dispositif selon la revendication 8, caractérisé en ce que la poignée d'armement (5) présente une forme de glaive en coupe transversale, au moins dans sa région de contact avec les lèvres d'étanchéité.

10. Dispositif selon la revendication 2, caractérisé en ce que les lèvres d'étanchéité (20, 21) sont fixées à l'intérieur de la boîte de culasse (1) et leurs parties lèvre (25) font saillie vers l'extérieur à travers la fente (4).

Fig.1

Fig.2

Fig.3

Fig.4